# EUROPEAN PATENT APPLICATION

(11) **EP 4 604 406 A1**
(43) Date of publication of application: **20.08.2025**
(21) Application number: 24883559.7
(22) Date of filing: 16.10.2024
(51) Int. Cl.: H04B 3/58, H02S 50/00

(54) **METHOD AND APPARATUS FOR REGISTERING CONTROLLER BY USING MULTI-REPEATERS IN PHOTOVOLTAIC POWER GENERATION SYSTEM**

(30) Priority: 09.11.2023 KR 20230154925
(71) Applicant: Hanwha Solutions Corporation, Jung-gu Seoul 04541 (KR)
(72) Inventor: HONG, Dahyun, Seoul 04541 (KR); KIM, Young Min, Seoul 04541 (KR); PARK, Dong-il, Seoul 04541 (KR); KIM, Hyun Gon, Seoul 04541 (KR); NOH, Hong Il, Seoul 04541 (KR); YUN, Ju Hwan, Seoul 04541 (KR)
(74) Representative: Mooser, Sebastian Thomas
(86) International application number: PCT/KR2024/015708
(87) International publication number: WO 2025/100767

(57) **Abstract**

A method of registering a controller by using multiple primaries in a photovoltaic system, according to an aspect, includes: registering one or more of a plurality of controllers in a master primary; in a case where the registration is completed, the master primary instructing a plurality of slave primaries to register, and the plurality of slave primaries identifying whether or not each of the plurality of controllers is capable of being registered; and registering, in any of the plurality of slave primaries, the controller identified to be capable of being registered, and in a case where the registration is unavailable, registering the controller in a primary having a lower communication strength by comparing communication strengths of the master primary and the plurality of slave primaries.

## Description

### Technical Field

The present disclosure relates to a method and apparatus for registering a controller by using multiple primaries in a photovoltaic system.

### Background Art

Recently, the installation of photovoltaic systems for generating energy by using solar energy has increased with an increase in interest in eco-friendly energy technology. Photovoltaic systems are systems that produce electricity by collecting solar energy through solar panels, and the electricity produced in this way is supplied to power grids of houses to be supplied as household electricity or stored in batteries and used. Producing power through photovoltaic systems is environmentally friendly, may reduce electricity bills in the long term, and thus has recently been in the spotlight.

In general, a number of photovoltaic (PV) panels are installed in a photovoltaic system, and each panel has installed therein a module level power electronics (MLPE) or monitoring module for monitoring power generation information such as a power generation amount, temperature, and failure. To match pieces of power generation information with the installed MLPE or monitoring module, a process of transmitting and receiving unique information of an MLPE or monitoring product and collecting the unique information in a primary is needed.

However, in the case of a photovoltaic system that does not perform registration such as collecting unique information of each MLPE or module in a primary and then assigning a number to each, unique identification information and pieces of information for monitoring may be transmitted indiscriminately and thus conflicts may occur in communication and periodicity of communication is not easily secured, but no countermeasures therefor may be prepared.

In the case of a photovoltaic system that performs registration, a unique serial number of an MLPE or module is manually filled in and then registered in a primary, and thus, a long time is taken and the serial number may be incorrectly registered by a mistake or error of an installer.

To solve these problems, a method of automatically registering an MLPE or module in a primary has been recently used. However, in the case where a site at which a photovoltaic system is installed is large, the number of primaries increases with an increase in the number of MLPEs or modules, and due to the characteristics of power line communication (PLC), in the case where power signals are transmitted and received with strong strengths while power lines overlap or a distance between respective MLPEs or modules is close, an overlap occurs between data. Due to the overlap, one MLPE or module is registered in duplicate in multiple primaries during automatic registration, and thus, another system in which power line are not physically connected controls or monitors the corresponding MLPE or module.

### Disclosure

### Technical Problem

The technical problem to be solved by the present disclosure is to provide a method and apparatus for quickly and accurately registering a controller by using multiple primaries in a photovoltaic system.

Another technical problem to be solved by the present disclosure is to provide a method and apparatus for accurately registering a controller in a particular primary even in a signal overlapping environment that may cause duplicate registration, while maintaining an automatic registration method with a short initial installation time and fewer installer errors.

### Technical Solution

To solve the problems of the present disclosure described above, a method of registering a controller by using multiple primaries in a photovoltaic system, according to an embodiment of the present disclosure, may include: registering one or more of a plurality of controllers in a master primary; in a case where the registration is completed, the master primary instructing a plurality of slave primaries to register, and the plurality of slave primaries identifying whether or not each of the plurality of controllers is capable of being registered; and registering, in any of the plurality of slave primaries, the controller identified to be capable of being registered, and in a case where the registration is unavailable, registering the controller in a primary having a lower communication strength by comparing communication strengths of the master primary and the plurality of slave primaries.

In the present disclosure, the registering in the master primary may include: the master primary transmitting a registration signal to each of the plurality of controllers connected to the photovoltaic system; the controller, which receives the registration signal, deleting an address thereof and transmitting a response signal; and on the basis of receiving the response signal, registering the controller in the master primary.

In the present disclosure, the registering in the master primary may include not registering the controller in a case where the master primary transmits the registration signal for a certain number of times but fails to receive the response signal, and the master primary instructing the plurality of slave primaries to register in a case where attempting the registration as many as a number of controllers connected to the photovoltaic system.

In the present disclosure, the identifying may include a plurality of slave primaries instructed to register identifying, on the basis of orders thereof, whether or not each of the plurality of controllers is capable of being registered.

In the present disclosure, the identifying may include: the slave primary transmitting a registration signal to each of a plurality of controllers connected to the photovoltaic system; a controller, which receives the registration signal, transmitting a response signal; and on the basis of receiving the response signal, the slave primary identifying whether or not the controller is capable of being registered in a primary completing registration from among the master primary and a plurality of slave primaries.

In the present disclosure, the identifying may include: the primary, which completes the registration, responding by identifying whether or not the controller is registered therein; and on the basis of the response, registering, in the slave primary, the controller identified to be capable of being registered, and in a case where the registration is unavailable, registering the controller in a primary having a lower communication strength by comparing communication strengths of the primary and a primary previously registering the controller.

In the present disclosure, the comparing the communication strengths may include comparing at least one of a communication strength of a registration signal received by the controller and a communication strength of a response signal received by the primary.

An apparatus for registering a controller by using multiple primaries in a photovoltaic system, according to another aspect, includes at least one memory; and at least one processor, wherein the at least one processor is configured to register one or more of a plurality of controllers in a master primary, in a case where the registration is completed, allow the master primary to instruct a plurality of slave primaries to register, allow the plurality of slave primaries to identify whether or not each of the plurality of controllers is capable of being registered, register, in any one of the plurality of slave primaries, the controller identified to be capable of being registered, and in a case where the registration is unavailable, register the controller in a primary having a lower communication strength by comparing communication strengths of the master primary and the plurality of slave primaries.

A computer-readable recording medium according to another aspect may include a recording medium having recorded thereon a program for causing a computer to execute the method described above.

### Advantageous Effects

According to an embodiment of the present disclosure, multiple primaries are divided into a master and a slave, and are connected by a preset communication method to enable communication between the primaries.

Also, registration may be automatically made in a correct primary according to a signal strength of power line communication by sharing among primaries whether or not a controller registered in duplicate is present.

**In** addition, accuracy and speed may be optimized during an automatic registration process, and thus, competitiveness of a photovoltaic system product may be increased by performing registration accurately and quickly without being restricted by a size of an installation site.

### Description of Drawings

FIG. 1 is an example diagram illustrating an example of an apparatus for registering a controller by using multiple primaries in a photovoltaic system.
FIG. 2 is an example view illustrating a method of registering a controller by using multiple primaries in a photovoltaic system.
FIG. 3 is an example diagram illustrating components of a photovoltaic system.
FIG. 4 is an example view illustrating a method of registering a controller in a master primary, according to an embodiment.
FIG. 5 is an example view illustrating a method of registering a controller in a slave primary, according to an embodiment.
FIG. 6 is an example view illustrating configurations of a plurality of photovoltaic module arrays and a controller, according to an embodiment.
FIG. 7 is an example view referenced to illustrate a power supply structure of a building in which a photovoltaic system is installed, according to an embodiment.

### Best Mode

A method of registering a controller by using multiple primaries in a photovoltaic system, according to an embodiment of the present disclosure, may include: registering one or more of a plurality of controllers in a master primary; in a case where the registration is completed, the master primary instructing a plurality of slave primaries to register, and the plurality of slave primaries identifying whether or not each of the plurality of controllers is capable of being registered; and registering, in any of the plurality of slave primaries, the controller identified to be capable of being registered, and in a case where the registration is unavailable, registering the controller in a primary having a lower communication strength by comparing communication strengths of the master primary and the plurality of slave primaries.

### Mode for Invention

Advantages and features of the present disclosure, and methods of achieving the same will become apparent with reference to embodiments described in detail in conjunction with the accompanying drawings. However, it should be understood that the present disclosure is not limited to embodiments presented below, but may be implemented in various different forms, and includes all modifications, equivalents, and alternatives included in the spirit and scope of the present disclosure. The embodiments presented below are provided to ensure that the present disclosure is complete and to fully inform those skilled in the art of the scope of the disclosure. When describing the present disclosure, the detailed description of related known arts, which may obscure the subject matter of the present disclosure, is omitted.

Terms used herein are only used to describe particular embodiments, and are not intended to limit the present disclosure. Phrases such as "in some embodiments" or "in an embodiment" appearing in various locations in the present description, do not necessarily all refer to the same embodiment. The singular forms are intended to include the plural forms as well, unless the context clearly indicates otherwise. It should be understood that the terms "comprise", "have", etc. when used herein, specify the presence of stated features, integers, steps, operations, elements, components, and/or combinations thereof, but do not preclude the presence or addition of one or more other features, integers, steps, operations, elements, components, and/or combinations thereof.

In addition, the connection lines or connection members between the components shown in the drawings merely illustrate examples of functional connections and/or physical or circuit connections. In an actual apparatus, connections between components may be represented by various replaceable or additional functional connections, physical connections, or circuit connections.

The present embodiments may be modified in various ways and have various forms, and some embodiments are illustrated in the drawings and described in detail. However, it should be understood that the present embodiments are not intended to be limited to particular forms, but include all modifications and/or equivalents or alternatives included in the spirit and scope of the present embodiments. The terms used herein are merely used to describe embodiments and are not intended to limit the present embodiments.

Unless otherwise defined, the terms used in the present embodiments have the same meaning as commonly understood by those skilled in the art to which the present embodiments belong. Terms, such as those defined in commonly used dictionaries, should be interpreted as having a meaning that is consistent with their meaning in the context of the relevant art and will not be interpreted in an idealized or overly formal sense unless expressly so defined herein.

The detailed description of the present disclosure given below refers to the accompanying drawings which illustrate particular embodiments in which the present disclosure may be implemented. These embodiments are described in sufficient detail to enable those skilled in the art to implement the present disclosure. It should be understood that various embodiments of the present disclosure, while different, are not necessarily mutually exclusive. For example, particular shapes, structures, and characteristics described herein may be modified and implemented from an embodiment to another embodiment without departing from the spirit and scope of the present disclosure. In addition, it should be understood that locations or arrangements of individual components within each embodiment may also be changed without departing from the spirit and scope of the present disclosure. Therefore, the detailed description set forth below is not intended to be limiting, and the scope of the present disclosure should be accepted as encompassing the scope claimed by claims and all scopes equivalent thereto. In the drawings, similar reference numerals represent the same or similar components across multiple aspects.

Hereinafter, various embodiments of the present disclosure are described in detail with reference to the attached drawings to allow those skilled in the art to which the present disclosure pertains to easily implement the present disclosure.

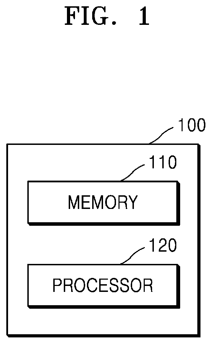

FIG. 1 is an example diagram illustrating an example of an apparatus for registering a controller by using multiple primaries in a photovoltaic system.

Referring to FIG. 1, an apparatus 100 for registering a controller by using multiple primaries in a photovoltaic system (hereinafter, referred to as an "apparatus") may include a memory 110 and a processor 120.

It is obvious to those skilled in the art that the apparatus 100 illustrated in FIG. 1 includes only components related to the present embodiments and may further include other general-purpose components in addition to the components illustrated in FIG. 1.

For example, the apparatus 100 may be implemented as various types of devices, such as a notebook PC, a desktop PC, a laptop, a tablet computer, a mobile device including a smartphone, a server device, and an embedded device. As a particular example, the apparatus 100 may correspond to a smartphone, a tablet device, an augmented reality (AR) device, an Internet of Things (IoT) device, an autonomous vehicle, or the like that performs speech recognition, image recognition, and image classification, and the like using artificial intelligence, but is not limited thereto. In addition, the apparatus 100 may include a dedicated hardware (HW) accelerator mounted on a device as described above, and the apparatus 100 may include a hardware accelerator such as a neural processing unit (NPU), a tensor processing unit (TPU), or a neural engine, which is a dedicated module for driving artificial intelligence, but is not limited thereto.

The memory 110 is hardware that stores various types of data processed within the apparatus 100, and may include a computer-readable recording medium. For example, the memory 110 may store pieces of data processed and pieces of data to be processed in the apparatus 100. In addition, the memory 110 may store applications, drivers, and the like to be driven by the apparatus 100. The memory 110 may include at least one of a volatile memory and a nonvolatile memory. The volatile memory may include dynamic random access memory (DRAM), static random access memory (SRAM), synchronous dynamic random access memory (SDRAM), phase-change random access memory (PRAM), magnetic random access memory (MRAM), and resistive random access memory (RRAM), ferroelectric random access memory (FeRAM), or the like. The nonvolatile memory may include read-only memory (ROM), programmable read-only memory (PROM), electrically programmable read-only memory (EPROM), electrically erasable programmable read-only memory (EEPROM), or the like.

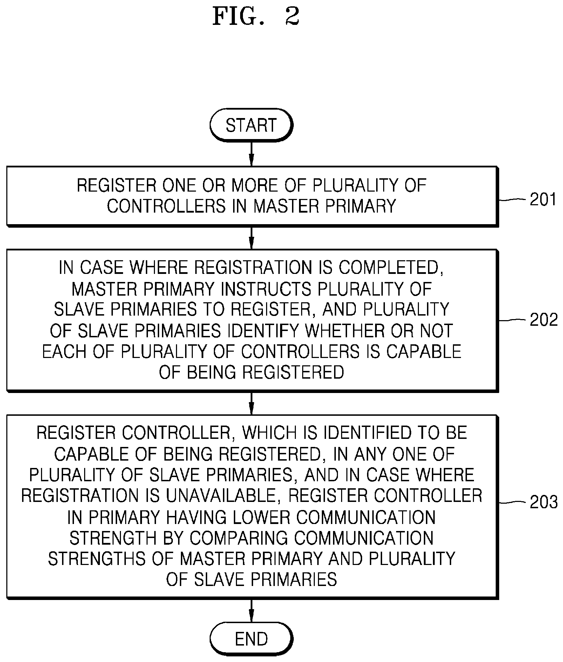

In an embodiment, the memory 110 may include magnetic memory, CD-ROM, Blu-ray or other optical disk storage, a hard disk drive (HDD), a solid state drive (SSD), compact flash (CF), secure digital (SD), micro-secure digital (Micro-SD), mini secure digital (Mini-SD), extreme digital (xD), or memory stick, but is not limited thereto. In addition, the memory 110 may store an operating system and at least one program code (a code to be executed by a processor 120 operating with reference to FIGS. 2 to 5).

Referring to FIGS. 2 to 5, the processor 120 may operate to control the overall function for executing the apparatus 100. For example, the processor 110 may control at least one other component (e.g., a hardware or software component) of an electronic device connected to the processor 120 by executing software (e.g., a program) stored in the memory 110 within the apparatus 100, and may generally control the apparatus 100 by performing various types of data processing or computations.

For example, the processor 120 may register one or more of a plurality of controllers in a master primary. **In** detail, the master primary may transmit a registration signal to each of the plurality of controllers connected to a system. A controller, which receives the registration signal, may delete an address thereof and then transmit a response signal. The processor 120 may register the controller in the master primary on the basis of receiving the response signal. In the case where the master primary transmits the registration signal for a certain number of times but fails to receive the response signal, the master primary does not register the controller and in the case where attempting registration as many as the number of controllers connected to the system, the master primary may instruct to a plurality of slave primaries to register.

For example, in the case where the registration is completed, the master primary instructs the plurality of slave primaries to register, and the plurality of slave primaries may identify whether or not each of the plurality of controllers may be registered. In detail, the plurality of slave primaries instructed to register may identify, on the basis of orders thereof, whether or not each of the plurality of controllers may be registered. Here, the slave primary may transmit a registration signal to each of the plurality of controllers connected to the system. Also, a controller, which receives the registration signal, may transmit a response signal, and the slave primary may identify, on the basis of receiving the response signal, whether or not the controller may be registered in a primary, which completely registers, from among the master primary and the plurality of slave primaries. The primary, which completely registers, may respond by identifying whether or not the controller is registered therein. On the basis of the response, the processor 120 may register a controller, which is identified to be capable of being registered, in the slave primary, and in the case where the registration is unavailable, register the controller in a primary having a lower communication strength by comparing communication strengths of a primary and a primary in which a controller is pre-registered.

For example, the processor 120 may register a controller, which is identified to be capable of being registered, in any one of the plurality of slave primaries, and in the case where the registration is unavailable, may register the controller in a primary having a lower communication strength by comparing communication strengths of the master primary and the plurality of slave primaries. In detail, the processor 120 may compare one or more of a communication strength of a registration signal received by a controller and a communication strength of a response signal received by a primary.

According to an embodiment, the processor 120 may be implemented as a central processing unit (CPU), a graphics processing unit (GPU), an application processor (AP), a neural processing unit (NPU), an image signal processor (ISP), a sensor hub processor, or a communication processor (CP) provided within the apparatus 100, but is not limited thereto.

FIG. 2 is an example view illustrating a method of registering a controller by using multiple primaries in a photovoltaic system.

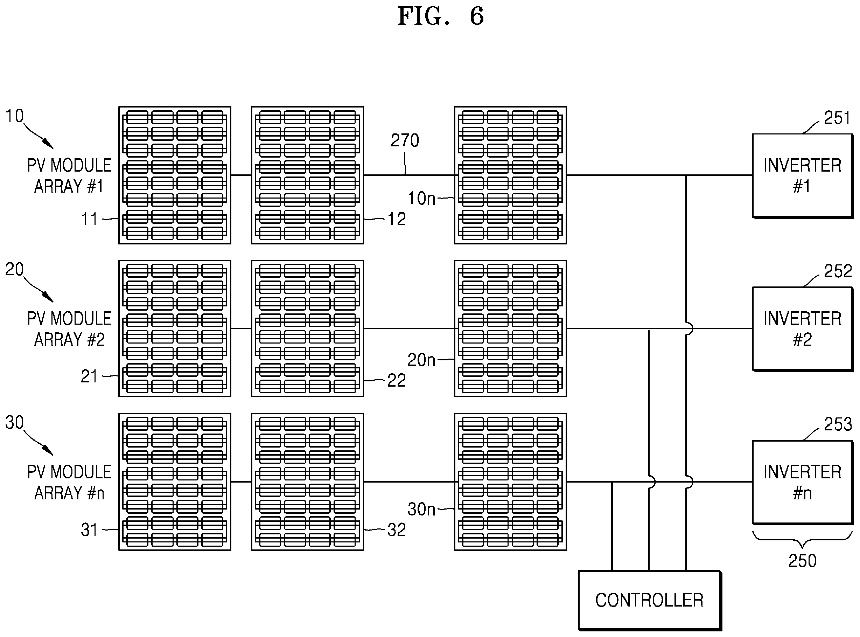

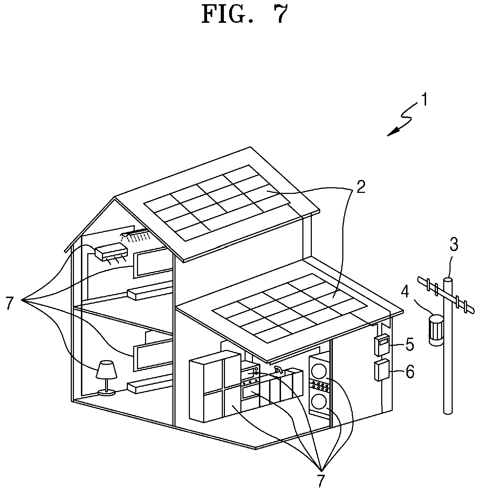

A photovoltaic system according to an embodiment of the present disclosure may include a plurality of photovoltaic modules and a plurality of controllers. Here, a controller may be attached to or connected to a photovoltaic module to control a photovoltaic panel. In addition, the controller may refer to a module level power electronics (MLPE) including a monitoring module that may monitor power generation information such as a voltage, current, power generation amount, temperature, and defect of a photovoltaic module or a communication module that may transmit monitored information to an external apparatus. Detailed descriptions of configurations of a photovoltaic module and a controller are given below with reference to FIG. 6, and a power supply structure of a building in which a photovoltaic system is installed is described below with reference to FIG. 7.

A process of matching a controller and pieces of power generation information may be needed to determine which power generation information corresponds to which controller. Therefore, a primary may transmit and receive unique information and power generation information of a controller and collect the same. The unique information is information through which the controller may be identified, and may refer to an identifier randomly set by a user or assigned from a manufacturer or the like. Here, the identifier may include any one of a number, a character, and a symbol, and may include a serial number.

The processor 120 may classify a primary into a master primary or a slave primary on the basis of a certain criterion, and may perform communication between primaries by using a preset communication method. In a more particular embodiment, the processor 120 may perform communication between primaries by using RS 485 communication. Here, the RS 485 communication may refer to serial communication through which digital data bits are continuously transmitted and communicated. However, according to another embodiment of the present disclosure, the preset communication method is not limited thereto, and various communication protocol or communication interface standards appropriate for data communication between a plurality of primaries may be used for communication between primaries.

Referring to FIG. 2, in operation 201, the processor 120 may register one or more of a plurality of controllers in a master primary.

In detail, in the case where the processor 120 receives a registration instruction from a user, the processor 120 may instruct the master primary to register, and the master primary, which receives the instruction, may register one or more of all controllers included in a photovoltaic system in a system of the master primary. In detail, the master primary may transmit a registration signal to all controllers, and in the case where receiving a response signal from a controller, may register the corresponding controller in the system thereof.

In operation 202, in the case where the registration is completed, the master primary may instruct a plurality of slave primaries to register, and the plurality of slave primaries may identify whether or not each of the plurality of controllers may be registered.

In detail, in the case where the master primary attempts to register as many as the total number of controllers connected to or included in the photovoltaic system, the processor 120 may determine that the registration by the master primary is completed. In the case where the registration is completed, the master primary may instruct all slave primaries or any one slave primary to register.

In the case where the master primary instructs all slave primaries to register, the slave primaries may attempt to register sequentially, starting from the slave primary having the fastest order on the basis of a certain order. In the case where the master primary instructs any one slave primary to register, registration may be sequentially attempted on the basis of a certain order, starting from the slave primary instructed to register.

The slave primary instructed to register may transmit a registration signal to all controllers included in the photovoltaic system, and upon receiving a response signal from a controller, may request another primary included in the photovoltaic system to identify the availability of registration to identify whether or not the corresponding controller may be registered in a system thereof. Here, the RS 485 communication may be used for communication with other primaries.

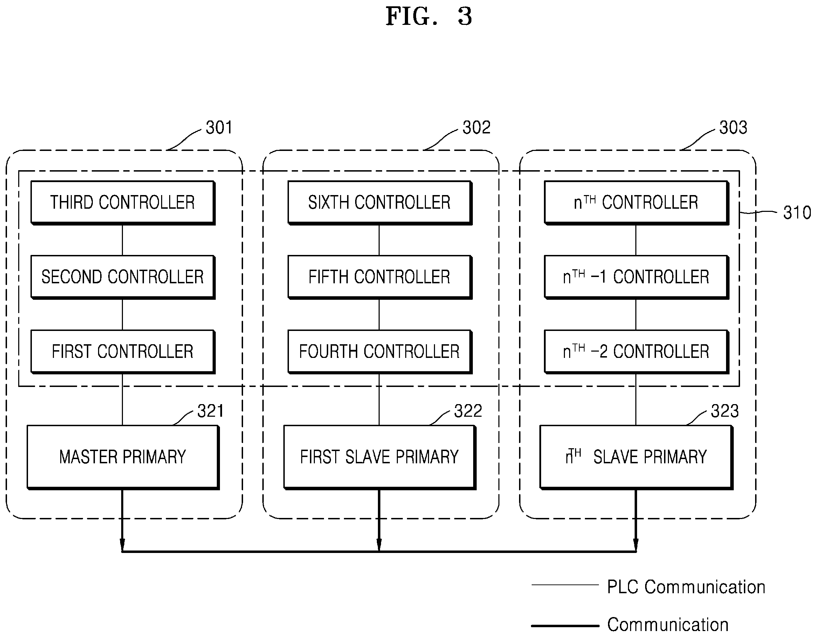

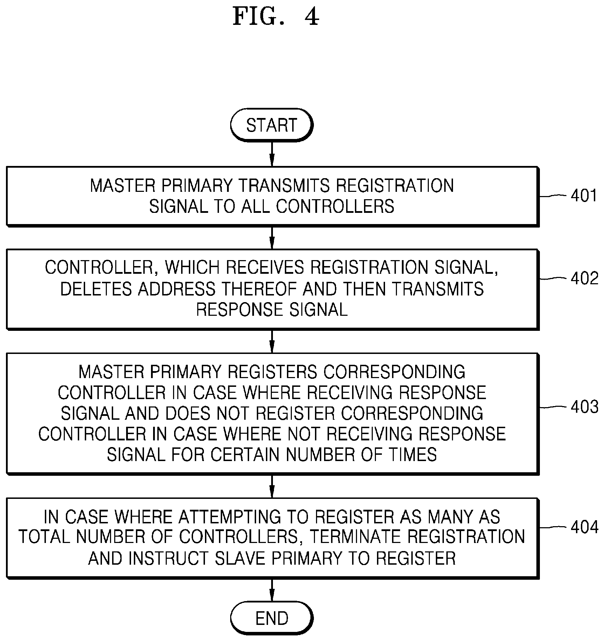

Detailed descriptions of operations 201 and 202 are given below with reference to FIGS. 3 and 4.

In operation 203, the processor 120 may register a controller, which is identified to be capable of being registered, in any one of the plurality of slave primaries and in the case where the registration is unavailable, may register the controller in a primary having a lower communication strength by comparing communication strengths of the master primary and the plurality of slave primaries.

A primary requested to identify may identify whether or not the corresponding controller is registered in a system thereof, respond that the registration is available in the case where the controller is not registered, and respond that the registration is unavailable in the case where the controller is registered. A controller, which is identified to be capable of being registered from all primaries by using the RS 485 communication, may be registered in a system of a primary that requests to identify the availability of registration. In contrast, in the case where the registration is identified to be unavailable from one or more primaries, the processor 120 may determine a system that registers a controller, by comparing communication strengths of a primary that previously registers the corresponding controller and a primary that requests to identify the availability of registration. For example, the processor 120 may compare communication strengths of registration signals received by a controller and register the controller in a system of a primary having a lower communication strength. Also, the processor 120 may compare communication strengths of response signals received by a primary and register a controller in a system of a primary having a lower communication strength. Here, in the case where the communication strength of the primary that previously registers is higher, the processor 120 may delete the corresponding controller from the system of the primary that previously registers and register the same in the system of the primary that requests to identify the availability of registration.

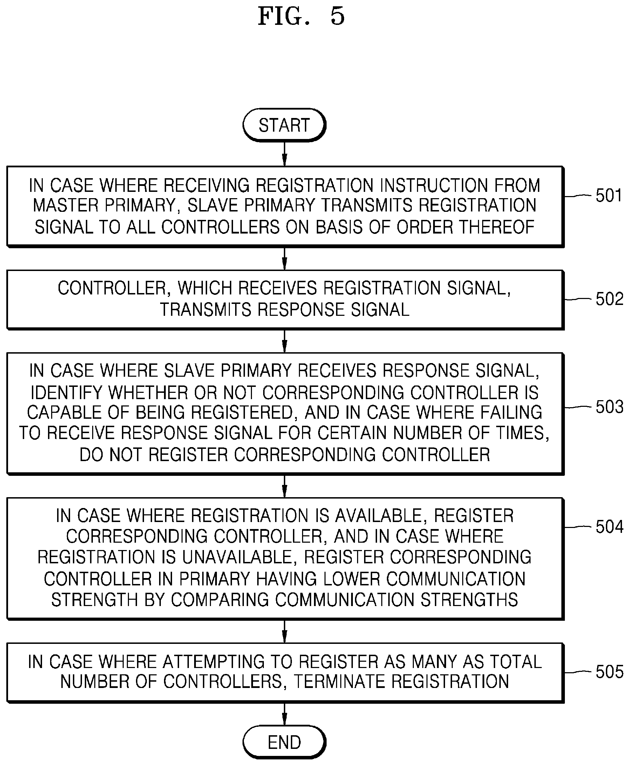

A detailed description of operation 203 is given below with reference to FIGS. 3 and 5.

FIG. 3 is an example diagram illustrating components of a photovoltaic system.

Referring to FIG. 3, a photovoltaic system according to an embodiment of the present disclosure may include one master primary 321 and one or more slave primaries 322 and 323. Here, the master primary 321 and the slave primaries 322 and 323 may transmit and receive information to and from one another by using RS 485 communication. In addition, the respective primaries 321, 322, and 323 may be connected to controllers 310 by using power line communication, and each of the controllers 310 may be physically connected to any one of a plurality of primaries 321, 322, and 323.

FIG. 4 is an example view illustrating a method of registering a controller in a master primary, according to an embodiment.

Referring to FIGS. 3 and 4 together, in operation 401, the master primary 321 may transmit a registration signal to all controllers 310. For example, the master primary 321 may attempt to register as many as the total number of all controllers 310 included in the photovoltaic system. Accordingly, the master primary 321 may transmit the registration signal to each of N controllers 310 included in the photovoltaic system.

In operation 402, a controller, which receives the registration signal transmitted by the master primary 321, may delete an address thereof and then transmit a response signal to the master primary 321. For example, in the case where the first to fourth controllers receive the registration signal transmitted by the master primary 321, the first to fourth controllers may delete addresses thereof and then transmit response signals to the master primary 321.

In operation 403, in the case where the master primary 321 receives a response signal transmitted by a controller, the processor 120 may register the corresponding controller in a system 301 of the master primary 321. In the case where the master primary 321 transmits a registration signal to a controller for a certain number of times but fails to receive a response signal from the controller, the processor 120 may determine that the corresponding controller is not connected to the master primary 321 by using power line communication, and the processor 120 may not register the corresponding controller in the system 301 of the master primary 321. For example, in the case where the master primary 321 receives the response signals transmitted by the first to fourth controllers, the processor 120 may register the first to fourth controllers in the system 301 of the master primary 321. In addition, in the case where the master primary 321 transmits the registration signal to a fifth controller for a certain number of times but fails to receive a response signal from the fifth controller, the processor 120 may determine that the fifth controller is not physically connected to the master primary 321, and the processor 120 may not register the fifth controller in the system 301 of the master primary 321.

In operation 404, in the case where the master primary 321 attempts to register as many as the total number of all controllers 310 included in the photovoltaic system, the registration may be terminated and a slave primary may be instructed to register. For example, in the case where the master primary 321 attempts to register all of the N controllers 310, the registration may be terminated and the slave primaries 322 and 323 may be instructed to register. In other words, in the case where the master primary 321 attempts to register N times, the processor 120 may recognize that the registration is completed and may terminate the registration by the master primary 321. The master primary 321, which terminates the registration, may sequentially instruct the slave primaries 322 and 323 to register.

FIG. 5 is an example view illustrating a method of registering a controller in a slave primary, according to an embodiment.

Referring to FIGS. 3 and 5 together, in operation 501, a slave primary, which receives a registration instruction from the master primary 321, may transmit a registration signal to all controllers 310 on the basis of an order thereof. Hereinafter, for convenience of description, a process in which a first slave primary 322 registers a controller is described. On the basis of a certain order, from among slave primaries, the first slave primary 322 may first transmit a registration signal to all controllers 310. In other words, the first slave primary 322 may attempt to register as many as the total number of all controllers 310 included in the photovoltaic system. Accordingly, the first slave primary 322 may transmit the registration signal to each of N controllers 310 included in the photovoltaic system.

In operation 502, a controller, which receives the registration signal transmitted by the first slave primary 322, may transmit a response signal to the first slave primary 322. For example, in the case where fourth to sixth controllers receive the registration signal transmitted by the first slave primary 322, the fourth to sixth controllers may transmit response signals to the first slave primary 322.

In operation 503, in the case where the first slave primary 322 receives the response signals transmitted by the fourth to sixth controllers, the first slave primary 322 may identify whether or not the fourth to sixth controllers may be registered. In the case where the first slave primary 322 transmits the registration signal to a controller for a certain number of times but fails to receive a response signal from the controller, the processor 120 may determine that the corresponding controller is not connected to the first slave primary 322 by using power line communication, and the processor 120 may not register the corresponding controller in the system 301 of the master primary 321. For example, in the case where the first slave primary 322 transmits the registration signal to a first controller for a certain number of times but fails to receive a response signal from the first controller, the processor 120 may determine that the first controller is not physically connected to the first slave primary 322, and the processor 120 may not register the first controller in a system 302 of the first slave primary 322. In addition, in the case where the first slave primary 322 receives the response signals transmitted by the fourth to sixth controllers, the first slave primary 322 may sequentially identify whether or not the fourth to sixth controllers may be registered in the master primary 321 and the other slave primary 323. In detail, the first slave primary 322 may request to identify whether or not the fourth controller is registered in the system 301 of the master primary 321 and a system 303 of the other slave primary 323. For example, in the case where the fourth controller is pre-registered in the system 301 of the master primary 321, the master primary 321 may respond that the fourth controller may not be registered. In addition, in the case where the fifth to sixth controllers are not registered in a system of any primary, the master primary 321 and the other slave primary 323 may respond that the fifth and sixth controllers may be registered.

In operation 504, the processor 120 may register the fifth to sixth controllers, which are identified to be capable of being registered, in the system 302 of the first slave primary 322, and determine, after comparing a communication strength whether or not the fourth controller identified to be incapable of being registered may be registered. In detail, the processor 120 may register the fourth controller in a primary having a lower communication strength by comparing a communication strength between the fourth controller, and the master primary 321 that pre-registers and a communication strength between the fourth controller and the first slave primary 322. Here, the communication strength may refer to a transmission and reception strength (PGA) in power line communication, and the processor 120 may compare one or more of a strength of a registration signal received by a controller or a strength of a response signal received by a primary. For example, the processor 120 may compare a communication strength of a response signal of the fourth controller received by the master primary 321 with a communication strength of a response signal of the fourth controller received by the first slave primary 322. Here, the fourth controller is physically connected to the first slave primary 322 by using power line communication, and thus, a PGA value of a response signal received by the first slave primary 322 may be lower than a PGA value of a response signal received by the master primary 321. The processor 120 may maintain existing registration in the case where a PGA value of a primary that pre-registers is lower, but may delete the existing registration and then perform registration in a new primary in the case where the PGA value of the primary that pre-registers is higher. Accordingly, the PGA value of the first slave primary 322 is lower, and thus, the processor 120 may delete the fourth controller registered in the system 301 of the master primary 321 and register the fourth controller in the system 302 of the first slave primary 322.

In operation 505, in the case where the first slave primary 322 attempts to register as many as the total number of all controllers 310 included in the photovoltaic system, the registration may be terminated, and the master primary 321 may instruct a slave primary in a next order to register or the first slave primary 322, which completes registration, may instruct a slave primary in a next order to register. The slave primary of the next order instructed to register may register a controller with reference to operations 501 to 504 of FIG. 5, and the processor 120 may repeat operations 501 to 505 until all slave primaries complete registration.

FIG. 6 is an example view illustrating configurations of a plurality of photovoltaic module arrays and a controller, according to an embodiment.

As illustrated in FIG. 6, a plurality of photovoltaic modules 11 to 10n, 21 to 20n, and 31 to 30n may be interconnected to configure the photovoltaic module arrays 10, 20, and 30.

A plurality of photovoltaic modules may be connected via a power line 270.

Each of photovoltaic module arrays may be connected to an inverter 250 (251 to 253). The inverter 250 converts energy generated through the photovoltaic module array into alternating current power.

In addition, each of a plurality of photovoltaic module arrays may be connected to a controller to transmit and receive data. A plurality of photovoltaic modules may transmit and receive data to and from the controller through power line communication (PLC).

The power line communication refers to a communication method of transmitting data by using a power line (cable) that supplies electricity. The power line communication refers to a technology that communicates by loading data into a frequency signal via a power line that supplies power. The power line communication may be divided into a high speed and a low speed on the basis of a speed and may be divided into a high voltage and a low voltage according to a voltage. For example, a home photovoltaic module and an apparatus may communicate by using a power signal of 50 to 60 Hz. In addition, in another embodiment, different frequency bands may be used.

A first photovoltaic module array 10 may include a plurality of photovoltaic modules 11 to 10n of a first group. In addition, the first photovoltaic module array 10 may be connected to a first inverter 251.

A second photovoltaic module array 20 may include a plurality of photovoltaic modules 21 to 20n of a second group, which are connected to one another in series. In addition, the second photovoltaic module array 20 may be connected to a second inverter 252.

A third photovoltaic module array 30 may include a plurality of photovoltaic modules 31 to 30n of a third group, which are connected to one another in series. In addition, the third photovoltaic module array 30 may be connected to a third inverter 253.

In the drawing, a photovoltaic module array is illustrated as including a plurality of photovoltaic modules connected in series, but may also include photovoltaic modules connected in parallel.

For example, in the case where a plurality of photovoltaic modules are connected in series, one photovoltaic module string (not shown) may be formed. In addition, a plurality of photovoltaic module strings may be connected in parallel to form one photovoltaic module array.

The plurality of photovoltaic modules 11 to 10n, 21 to 20n, and 31 to 30n may be connected to converters (not illustrated), respectively, and a plurality of converters may be connected to the inverter 250.

The inverter 250 and the controller may be connected to a plurality of photovoltaic modules and photovoltaic module arrays through the same power line 270.

The inverter 250 may add up and convert energy generated from the plurality of photovoltaic modules and photovoltaic module arrays.

The controller may transmit and receive data to and from the plurality of photovoltaic modules and photovoltaic module arrays through the power line 270 to receive data from the plurality of photovoltaic modules and photovoltaic module arrays.

Therefore, even in the case where a plurality of modules for collecting data from a photovoltaic module array or an individual photovoltaic module are not provided, the controller of the present disclosure may be connected to the plurality of photovoltaic module arrays through a coupling unit 70 to directly receive and process a plurality of pieces of data and thus improve a complex communication structure.

The controller may check an operation state and control an operation in units of photovoltaic module arrays. In addition, the controller of the present disclosure may check an operation state of an individual photovoltaic module and control an operation thereof.

Accordingly, the controller may quickly process data of a photovoltaic module array and an individual photovoltaic module.

The controller may monitor a power generation amount and operation state of a photovoltaic module on the basis of data received from the photovoltaic module. In addition, a process of matching the controller with the power generation amount and the operation state is needed to know which power generation amount and operation state are information corresponding to which controller. Therefore, a primary may transmit and receive unique information of a controller, and a power generation amount and an operation state, and the same may be collected with reference to FIGS. 2 to 5.

The controller may detect a failure of a photovoltaic module by receiving a failure signal through an MLPE of the photovoltaic module. In some cases, in the case where a failure occurs in a photovoltaic module, the controller may quickly transmit a control signal for an operation stop to the corresponding photovoltaic module according to an operation state.

In addition, in the case where a failure occurs in an individual photovoltaic module, the controller may control individually each photovoltaic module.

FIG. 7 is an example view referenced to illustrate a power supply structure of a building in which a photovoltaic system is installed, according to an embodiment.

As illustrated in FIG. 7, a plurality of photovoltaic modules 2 may be installed on the roof of a building to generate energy. As described in FIG. 6, the plurality of photovoltaic modules 2 may be connected to form a photovoltaic module array.

An inverter 6 may convert energy of the photovoltaic module 2 to supply generated power into a building 1.

Meanwhile, commercial power transmitted through an electric pole 3 may be supplied to the building 1 through a transformer 4.

A plurality of home appliances 7 may be selectively supplied with at least one of the commercial power and the generated power of the photovoltaic module 2 to operate. A watt-hour meter 5 may measure an amount of power consumed in the building 1.

In addition, in the case where a separate energy storage system (ESS) is provided, energy of the photovoltaic module 2 may be stored in the energy storage system (ESS).

In the case where the plurality of photovoltaic modules 2 are connected, a photovoltaic module array may be configured. The photovoltaic module array is an assembly of a plurality of photovoltaic modules and may include one output terminal.

Meanwhile, the photovoltaic module 2 may include a module level power electronics (MLPE) apparatus.

A controller controls power conversion in units of photovoltaic modules and may optimize generated energy by including an optimizer. The controller may include a monitoring function of monitoring a state or a power generation amount of a photovoltaic module and transmitting data to the outside.

In addition, the controller includes a rapid shutdown (RSD) function, and thus, the photovoltaic module may stop an operation according to the degree of failure.

The photovoltaic module 2 may include a monitoring device that monitors a state or a power generation amount of a photovoltaic module or a rapid shutdown (RSD) device that performs a rapid shutdown function.

In addition, at least one of a plurality of photovoltaic modules and a controller may include a communication module for power line communication.

The controller may receive data from at least one photovoltaic module array via power line communication.

The controller may receive data regarding the photovoltaic module from the module level power electronics (MLPE) apparatus provided in the photovoltaic module.

The controller may monitor a power generation amount and an operation state of the photovoltaic module on the basis of the received data.

In addition, in the case where a rapid shutdown (RSD) function included in the MLPE device is executed, the controller may receive a failure signal regarding the same to detect a failure of the photovoltaic module. In some cases, in the case where a failure occurs in a photovoltaic module, the controller may transmit a control signal for an operation stop to the corresponding photovoltaic module according to an operation state.

The above description is for illustration, and those skilled in the art to which the description belong may understand that the description may be easily modified into other particular forms without changing the spirit or essential features of the present disclosure. Therefore, it should be understood that the embodiments described above are examples in all respects and not limited. For example, each component described as a single type may be implemented in a distributed manner, and similarly, components described as distributed may be implemented in a combined form.

The operations constituting the method according to the present disclosure may be performed in any appropriate order unless an order of the operations is explicitly stated or stated to the contrary. The present disclosure is not necessarily limited according to the order of description of the operations. The use of all examples or example terms (e.g., and the like) in the present disclosure is simply to describe the present disclosure in detail, and the scope of the present disclosure is limited due to the examples or example terms unless otherwise limited by claims. In addition, those skilled in the art may appreciate that various modifications, combinations, and changes may be made according to design conditions and factors within the scope of appended claims or equivalents thereof.

Therefore, the spirit of the present disclosure should not be limited to the above-described embodiments, and not only claims described below, but also all scopes equivalent to the claims or equivalently changed therefrom will fall within the spirit of the present disclosure.

## Claims

1. A method of registering a controller by using multiple primaries in a photovoltaic system, the method comprising:
registering one or more of a plurality of controllers in a master primary;
instructing, by the master primary, a plurality of slave primaries to register, in a case where the registration is completed, and identifying, by the plurality of slave primaries, whether or not each of the plurality of controllers is capable of being registered; and
registering, in any of the plurality of slave primaries, the controller identified to be capable of being registered, and in a case where the registration is unavailable, registering the controller in a primary having a lower communication strength by comparing communication strengths of the master primary and the plurality of slave primaries.

2. The method of claim 1, wherein the registering in the master primary comprises:
transmitting, by the master primary, a registration signal to each of a plurality of controllers connected to the photovoltaic system;
deleting, by the controller which receives the registration signal, an address thereof and transmitting a response signal; and
registering the controller in the master primary on the basis of receiving the response signal.

3. The method of claim 2, wherein the registering in the master primary comprises not registering the controller in a case where the master primary transmits the registration signal for a certain number of times but fails to receive the response signal, and instructing, by the master primary, the plurality of slave primaries to register in a case where attempting the registration as many as a number of the controllers connected to the photovoltaic system.

4. The method of claim 1, wherein the identifying comprises identifying, by a plurality of slave primaries instructed to register, on the basis of orders thereof, whether or not each of the plurality of controllers is capable of being registered.

5. The method of claim 4, wherein the identifying comprises:
transmitting, by the slave primary, a registration signal to each of a plurality of controllers connected to the photovoltaic system;
transmitting, by a controller which receives the registration signal, a response signal; and
identifying, by the slave primary, on the basis of receiving the response signal, whether or not the controller is capable of being registered in a primary completing registration from among the master primary and a plurality of slave primaries.

6. The method of claim 5, wherein the identifying comprises:
responding by identifying, by the primary, which completes the registration, whether or not the controller is registered therein; and
registering, on the basis of the response, in the slave primary, the controller identified to be capable of being registered, and registering, in a case where the registration is unavailable, the controller in a primary having a lower communication strength by comparing communication strengths of the primary and a primary previously registering the controller.

7. The method of claim 1, wherein the comparing the communication strengths comprises comparing at least one of a communication strength of a registration signal received by the controller and a communication strength of a response signal received by the primary.

8. An apparatus for registering a controller by using multiple primaries in a photovoltaic system, the apparatus comprising:
at least one memory; and
at least one processor, wherein the at least one processor is configured to register one or more of a plurality of controllers in a master primary, in a case where the registration is completed, allow the master primary to instruct a plurality of slave primaries to register, allow the plurality of slave primaries to identify whether or not each of the plurality of controllers is capable of being registered, register, in any one of the plurality of slave primaries, the controller identified to be capable of being registered, and in a case where the registration is unavailable, register the controller in a primary having a lower communication strength by comparing communication strengths of the master primary and the plurality of slave primaries.

9. The apparatus of claim 8, wherein the at least one processor is further configured to allow the master primary to transmit a registration signal to each of a plurality of controllers connected to the photovoltaic system, allow the controller receiving the registration signal to delete an address thereof and transmit a response signal, and on the basis of receiving the response signal, register the controller in the master primary.

10. The apparatus of claim 9, wherein the at least one processor is further configured to not register the controller in a case where the master primary transmits the registration signal for a certain number of times but fails to receive the response signal, and allow the master primary to instruct the plurality of slave primaries to register in a case where attempting the registration as many as a number of the controllers connected to the photovoltaic system.

11. The apparatus of claim 8, wherein the at least one processor is further configured to allow a plurality of slave primaries instructed to register to identify, on the basis of orders thereof, whether or not each of the plurality of controllers is capable of being registered.

12. The apparatus of claim 11, wherein the at least one processor is further configured to allow the slave primary to transmit a registration signal to each of a plurality of controllers connected to the photovoltaic system, allow a controller receiving the registration signal to transmit a response signal, and allow the slave primary to identify, on the basis of receiving the response signal, whether or not the controller is capable of being registered in a primary completing registration from among the master primary and a plurality of slave primaries.

13. The apparatus of claim 12, wherein the at least one processor is further configured to allow the primary completing the registration to respond by identifying whether or not the controller is registered therein, and on the basis of the response, register, in the slave primary, the controller identified to be capable of being registered, and in a case where the registration is unavailable, register the controller in a primary having a lower communication strength by comparing communication strengths of the primary and a primary previously registering the controller.

14. The apparatus of claim 8, wherein the at least one processor is configured to compare at least one of a communication strength of a registration signal received by the controller and a communication strength of a response signal received by the primary.

15. A computer-readable recording medium having recorded thereon a program for causing a computer to execute the method according to claim 1.
